# EUROPEAN PATENT SPECIFICATION

(11) **EP 3 469 036 B1**
(45) Date of publication and mention of the grant of the patent: **01.09.2021**
(21) Application number: 17733249.1
(22) Date of filing: 13.06.2017
(51) Int. Cl.: C09K 8/03, C09K 8/64, C09K 8/82

(54) **LOW-PHOSPHORUS AND NON-PHOSPHORUS GELLED HYDROCARBON WELL TREATMENT FLUIDS**
PHOSPHORARME UND PHOSPHORFREIE GELIERTE KOHLENWASSERSTOFFBOHRLOCHBEHANDLUNGSFLÜSSIGKEITEN
FLUIDES DE TRAITEMENT DE PUITS D'HYDROCARBURES GÉLIFIÉS À BASSE TENEUR EN PHOSPHORE ET SANS PHOSPHORE

(30) Priority: 13.06.2016 US 201662349269 P
(43) Date of publication of application: 17.04.2019
(73) Proprietor: Saudi Arabian Oil Company, Dhahran 31311 (SA)
(72) Inventor: LI, Leiming, Dhahran 31311 (SA); AL-MUNTASHERI, Ghaithan A., Dhahran 31311 (SA); LIANG, Feng, Dhahran 31311 (SA); OZDEN, Sehmus, Dhahran 31311 (SA)
(74) Representative: D Young & Co LLP
(86) International application number: PCT/US2017/037173
(87) International publication number: WO 2017/218484

(56) References cited:
- CA-A1- 2 665 442
- US-A- 3 799 267
- US-B1- 6 248 699

## Description

### TECHNICAL FIELD

The present disclosure generally relates to gelled hydrocarbon fluids, to methods of making gelled hydrocarbon fluids, and to methods of using the gelled hydrocarbon fluids in wellbore treatments.

### BACKGROUND

Gelled hydrocarbons are used in hydraulic fracturing to mitigate problems associated with water and foam systems. The fracturing fluids are hydraulically injected into a wellbore that penetrates the subterranean formation. The fracturing fluids are propelled against the formation strata by high pressure, forcing the strata to crack and fracture. With water-based fracturing fluids, high water saturation near the fracture face can reduce the relative permeability of the fluids to oil and gas, thus lowering the overall hydrocarbon production. Water can induce issues such as clay swelling, clay migration, scale formation, and emulsion blockage. Water-based fracturing fluids reduce conductivity and cause damage by depositing a thick polymer filter cake on fracture walls. Gelled oil treatment fluids, also called gelled hydrocarbon treatment fluids, are usually compatible with the water-sensitive formations and do not cause the operational issues previously mentioned. Therefore, gelled oil fluids can minimize impairment to fracture conductivity, while having low solids contents, and can carry up to approximately 2.16 kg/L(18 pounds per gallon (lb/gal)) of proppant.

Modern gelled oil fluid systems typically include alkyl phosphate esters as a gelling agent, and iron (such as Fe⁺³) compounds or aluminum (Al⁺³) compounds as a crosslinker. In a gelled oil fluid, for example, phosphate esters may be crosslinked with iron compounds, forming a three-dimensional network that limits the mobility of the hydrocarbon molecules in the fluid. This way, a hydrocarbon gel may be formed.

Even so, the alkyl phosphate esters typically used in gelled oil fluids can increase fouling in distillation towers of oil refineries that process oil produced from formations fractured using the gelled oil.

US 6248699 B1 relates to a gelled hydrocarbon fluid useful as a fracturing fluid in subterranean formations comprising at least one gelling agent which is a salt of a carboxylic acid having from about 6 to about 30 carbon atoms.

### SUMMARY

An on-going need exists to decrease the amount of phosphate esters used in a gelled fluid system while maintaining a viscosity suitable for uses in well treatments at high temperatures, such as equal to or greater than 121 °C (250 °F). This disclosure is directed to gelled fluids, to methods of making gelled fluids, and to methods of treating subterranean formations using the gelled fluids.

According to one aspect of the present invention, there is provided a gelled fluid that includes a gellable organic solvent, such as diesel or crude oil, from 0.1% to 20% by weight, based on the total weight of the gelled fluid, of an aluminum alkanoate crosslinking compound, and from 0.1% to 5% by weight, based on the total weight of the gelled fluid, of a mutual solvent that increases a solvation rate of the aluminum alkanoate crosslinking compound in the gellable organic solvent, wherein the mutual solvent is chosen from glycols, glycol ethers, or combinations thereof, and wherein the gellable organic solvent is chosen from diesel oil, crude oil, kerosene, paraffinic oil, refined oil, mineral oil, shale oil, tight oil, liquefied natural gas, vegetable oil, animal oil, or combinations thereof.

According to another aspect of the present invention, methods of preparing a gelled fluid are provided that include combining an aluminum alkanoate and a first volume of a gellable organic solvent to form a pre-solvation mixture, gelling the pre-solvation mixture to form a pre-solvated gel, combining the pre-solvated gel with a formulation fluid to form a gellable mixture, the formulation fluid comprising a second volume of the gellable organic solvent, and gelling the gellable mixture to form the gelled fluid, wherein the gellable organic solvent is chosen from diesel oil, crude oil, kerosene, paraffinic oil, refined oil, mineral oil, shale oil, tight oil, liquefied natural gas, vegetable oil, animal oil or a combination thereof, wherein a mutual solvent is added to the first volume of the gellable organic solvent, wherein a mutual solvent is added to the first volume of the gellable organic solvent, and wherein the mutual solvent increases a solvation rate of the aluminum alkanoate in the gellable organic solvent, which is chosen from glycols, glycol ethers, or combinations thereof.

According to a further aspect of the present invention, methods for treating a subterranean formation are provided that include introducing the gelled fluid as described above or the gelled fluid prepared by the method as described above into the subterranean formation.

### BRIEF DESCRIPTION OF THE DRAWINGS

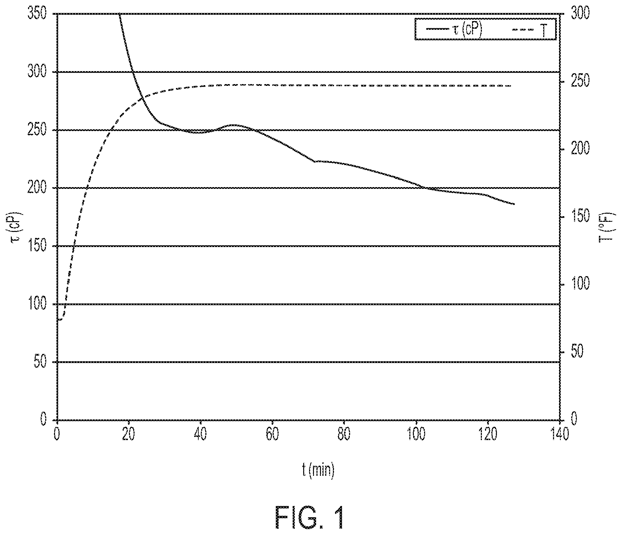

FIG. 1 is a graph of the viscosity (τ) and temperature as functions of time (time (t) in minutes), assessing viscosity at 121 °C (250 degrees Fahrenheit (°F)) of a gelled hydrocarbon fluid prepared with diesel, 8 mL/L (8 gallons per thousand gallons (gpt; 1 gpt is equivalent to 1 milliliter per liter (mL/L))) of EG-2, and 8 mL/L (8 gpt) of EA-3.

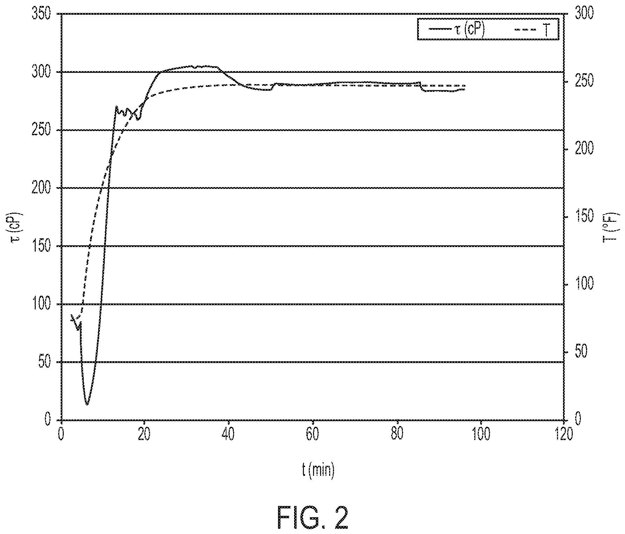

FIG. 2 is a graph of the viscosity (τ) and temperature (T) as functions of time (time (t) in minutes), assessing viscosity at 121 °C (250 °F) of a gelled hydrocarbon fluid according to embodiments of this disclosure containing diesel 2 mL/L (2 gpt) of EG-2, 2 mL/L (2 gpt) of EA-3, and 2.4% by weight Al octoate.

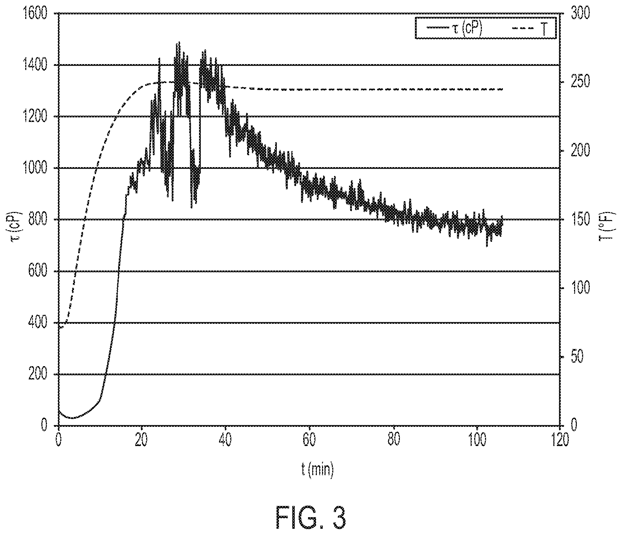

FIG. 3 is a graph of the viscosity (τ) and temperature as functions of time (time (t) in minutes), assessing viscosity at 121 °C (250 °F) of a gelled hydrocarbon fluid according to embodiments of this disclosure containing a total of 1.7% aluminum octoate in diesel: 0.5% by weight of pre-solvated aluminum octoate and 1.2% of the dry aluminum octoate.

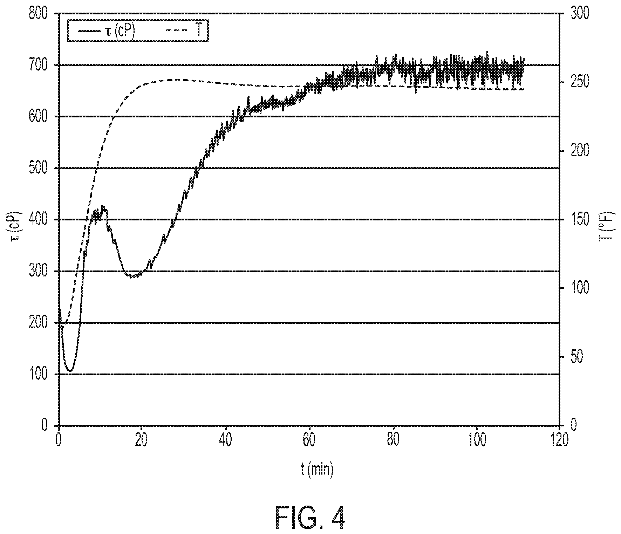

FIG. 4 is a graph of the viscosity (τ) and temperature as functions of time (time (t) in minutes), assessing viscosity at 121 °C (250 °F) of a gelled hydrocarbon fluid according to embodiments of this disclosure containing a total of 1.7% aluminum octoate in diesel: 1.2% by weight of pre-solvated aluminum octoate and 0.5% of the dry aluminum octoate.

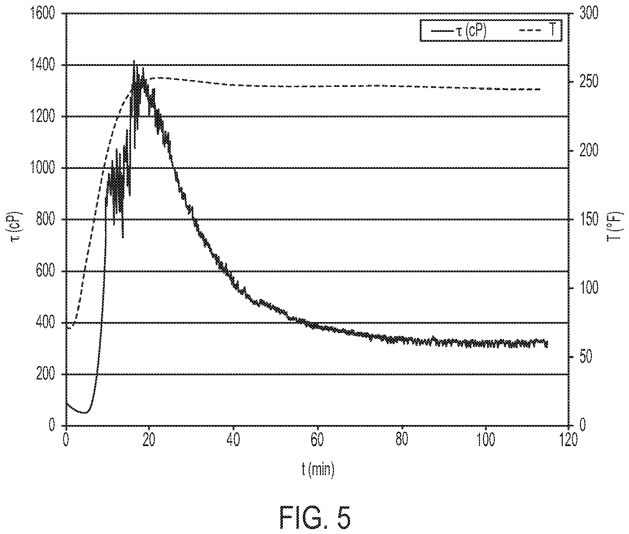

FIG. 5 is a graph of the viscosity (τ) and temperature as functions of time (time (t) in minutes), assessing viscosity at 121 °C (250 °F) of a gelled hydrocarbon fluid according to embodiments of this disclosure containing 1.8% pre-solvated aluminum octoate and 1% of an alcohol solvent in diesel.

### DETAILED DESCRIPTION

Specific embodiments of the present application will now be described. It should be understood that disclosure may be embodied in different forms and should not be construed as limited to the embodiments set forth in this disclosure. Rather, these embodiments are provided so that this disclosure will be thorough and complete, and will fully convey the scope of the subject matter to those skilled in the art. The following definitions are provided in order to aid those skilled in the art in understanding the detailed description of the disclosure.

Unless otherwise defined, all technical and scientific terms used in this disclosure have the same meaning as commonly understood by one of ordinary skill in the art. The terminology used in the description is for describing particular embodiments only and is not intended to be limiting. As used in the specification and appended claims, the singular forms "a," "an," and "the" are intended to include the plural forms as well, unless the context clearly indicates otherwise.

As used in this disclosure, the term "fracturing" refers to processes and methods of breaking down a geological formation and creating a fracture, in a rock formation around a well bore, for example, by pumping fluid at very high pressures. This increases production rates from a hydrocarbon reservoir. Numerous conventional techniques for fracturing are known in the art.

As used in this disclosure, "water" includes deionized water, distilled water, brackish water, brine, fresh water, spring water, tap water, mineral water or water substantially free of chemical impurities. The term "water" also includes "produced water," such as water obtained during fracturing, even though produced water may contain chemical impurities such as oil. The term "produced water" means water recovered from a fracturing wellbore, regardless of whether the water was originally present in fracturing fluids injected into the wellbore. Likewise, "produced oil" means oil recovered from a fracturing wellbore, regardless of whether the oil was originally present in fracturing fluids injected into the well bore.

In this disclosure, except where clearly identified otherwise, weight percents are based on the total weight of the composition and are referenced as "weight percent" or "% by weight."

The unit "gpt" is gallons per thousand gallons (X gpt is equivalent to X mL/L). More specifically, in the context of gelled fluids, the unit "gpt" refers to gallons of a component of the gelled fluid per thousand gallons of organic solvent to which the component was added.

Embodiments of the present disclosure are directed to gelled formulations, to methods of making the gelled formulations, and to methods of treating a subterranean formation using the gelled formulations, such as in fracturing treatments of underground formations bearing oil, gas, or oil and gas. Embodiments of gelled organic-based fluid formulations will now be described. Embodiments of methods for making gelled fluids will be described subsequently.

Gelled fluids according to embodiments include a gellable organic solvent, such as diesel or crude oil, an aluminum alkanoate crosslinking compound, and a mutual solvent. The gelled fluid includes from 0.1% to 20% by weight, based on the total weight of the gelled organic-based fluid formulation, of an aluminum alkanoate crosslinking compound. The gelled fluid includes from 0.1% to 5% by weight, based on the total weight of the gelled organic-based fluid formulation, of a mutual solvent that increases a solvation rate of the aluminum alkanoate crosslinking compound in the gellable organic solvent.

As disclosed herein, the gellable organic solvent may be any organic solvent that is capable of forming a crosslinked gel when combined with a crosslinker compound. The gellable organic solvent may be any solvent composition capable of forming a crosslinked gel that is useful for fracking operations, for example. According to the invention, the gellable organic solvent is chosen from diesel oil, crude oil, kerosene, paraffinic oil, refined oil, mineral oil, shale oil, tight oil, liquefied natural gas (LNG), vegetable oil, animal oil, or combinations thereof. The performance of a gelled fluid also depends on the nature of the liquid hydrocarbon carrier used to prepare the fluid. Low-quality hydrocarbon may significantly damage the performance of the gelled fluid made with it.

The aluminum crosslinking compound is an aluminum alkanoate. Aluminum alkanoates include aluminum alkyl tricarboxylate salts having alkyl groups of from 1 to 40 carbon atoms, from 1 to 20 carbon atoms, from 5 to 20 carbon atoms, or from 5 to 10 carbon atoms, for example. The alkyl groups of the aluminum alkanoates may be saturated, straight, or branched hydrocarbon chains. A non-limiting example of an aluminum alkanoate is aluminum octanoate, aluminum tris(2-ethylhexanoate) that is also known as aluminum octoate ("Al octoate"), or other aluminum carboxylates. The gelled fluid contains from 0.1% to 20% by weight, based on the total weight of the gelled fluid, of the aluminum alkanoate crosslinking compound. In embodiments, the gelled fluid may contain from 0.1 to 10% by weight, or from 0.1% to 5% by weight, based on the total weight of the gelled fluid, of the aluminum alkanoate crosslinking compound.

The gelled fluid further includes at least one mutual solvent chosen from glycols, glycol ethers, or combinations thereof. The mutual solvent increases a solvation rate of the aluminum alkanoate crosslinking compound in the gellable organic solvent, particularly when the ingredients of the gelled fluid are combined. Suitable mutual solvents include solvents that are miscible with other oilfield solvents typically included in hydrocarbon gels used for fracking operations. Examples of mutual solvents include solvents that have at least one diol functionality. Glycol compounds include dihydric alcohols or diols. Examples of diols include ethylene glycol, butylene glycol, diethylene glycol, glycerin, propylene glycol, tetramethylene glycol, tetramethylethylene glycol, trimethylene glycol, and glycol ethers. Examples of glycol ethers include alkyl ethers of ethylene glycol, alkyl ethers of propylene glycol, EGMBE (ethylene glycol mono-butyl ether), propylene glycol n-butyl ether, diethylene glycol oxybis(2-propanol), triethylene glycol monomethyl ether, and combinations of these. In some embodiments, the mutual solvent includes 2-butoxyethanolThe gelled fluid contains from 0.1% to 5% by weight of mutual solvent based on the total weight of the gelled fluid. In embodiments, the gelled fluid may contain from 0.1% to 4%, from 0.1 to 3%, from 0.1 to 2%, or from 0.1 to 1% mutual solvent, for example, based on the total weight of the gelled fluid. As an illustrative example, the gelled fluid according to some embodiments may contain from 0.1% to 5% by weight, from 0.1% to 4%, from 0.1% to 3%, from 0.1 to 2%, or from 0.1 to 1% 2-butoxyethanol, for example, based on the total weight of the gelled fluid.

The gelled fluids according to embodiments may further include proppant materials. The selection of a proppant involves many compromises imposed by economical and practical considerations. Criteria for selecting the proppant type, size, and concentration are based on the needed dimensionless conductivity. Such proppants may include natural or synthetic materials (including but not limited to glass beads, ceramic beads, sand, gravel, and bauxite); coated materials or materials that contain chemicals. More than one proppant may be included in the gelled fluids. Suitable proppants may include resin-coated or pre-cured resin-coated particles, provided that the resin and any other chemicals that might be released from the coating or come in contact with the other chemicals of the gelled fluids of this disclosure are compatible with the released chemicals.

Additional additives may be incorporated into the gelled fluids according to embodiments to increase viscosity or to enhance gel-strength. Gelled organic-based fluids according to embodiments may further include one or more additives such as surfactants, salts (for example potassium chloride), anti-foam agents, scale inhibitors, corrosion inhibitors, fluid-loss additives, bactericides, or combinations of these. The purpose of a breaker is to "break" or diminish the viscosity of the fracturing fluid so that this fluid is more easily recovered from the fracture during clean-up. Additional additives may include, but are not limited to polyelectrolytes, such as polycations and polyanions; zwitterionic polymers, such as zwitterionic polyacrylamides; and copolymers and other surfactants.

In some embodiments, the gelled fluids may also include breaker material. The breaker material may be an encapsulated breaker. In other embodiments, the gelled fluid may include a breaker selected from the group consisting of oxidative breakers, enzymes, pH modifiers, metal chelators, metal complexes, polymer hydrolysis enhancers, and micelle disturbing substances. Any breaker material suitable for reducing viscosity of the gelled fluids may be included in the gelled fluids, such as calcined magnesium oxide and tetraethylenepentamine. The breaker may be solid or liquid. The breaker may be encapsulated. The breaker may include delay breaker or impregnated breaker. Examples of alkaline pH modifiers that can be used to cause emulsion destabilization include alkali metal hydroxides, alkali metal oxides, alkali metal phosphates, alkali metal carbonates and alkali metal bicarbonate, such as sodium carbonate or ammonium bicarbonate; alkaline earth oxides, alkaline earth phosphates, and alkaline earth carbonates, such as ammonium hydroxide, ammonium carbonate, and ammonium bicarbonate; alkali metal silicates, and base precursors such as ureas and substituted ureas, cyanates, alkylamines and certain alkanolamines, quaternary ammonium salts, ammonium salts and salts of a weak acid and a strong base, among others.

The gelled fluids according to any of the embodiments previously described may be used to treat subterranean formations by introducing the gelled fluid into the subterranean formation. Additionally, subterranean formations may be treated using the gelled fluids according to any of the embodiments previously described by any suitable fracking technique.

Having now described gelled fluids according to various embodiments, methods for preparing the gelled fluids will now be described. According to the invention, methods for preparing gelled fluids may include combining an aluminum alkanoate and a first volume of a gellable organic solvent to form a pre-solvation mixture; gelling the pre-solvation mixture to form a pre-solvated gel; combining the pre-solvated gel with a formulation fluid to form a gellable mixture, the formulation fluid including a second volume of the gellable organic solvent; and gelling the gellable mixture to form the gelled fluid. In such methods, at least a portion of the aluminum alkanoate undergoes a pre-solvation process.

The methods for preparing gelled fluids include combining an aluminum alkanoate and a first volume of a gellable organic solvent to form a pre-solvation mixture. The aluminum alkanoate and the gellable organic solvent have been described previously with respect to embodiments of gelled fluids. The combining the aluminum crosslinking compound with a first volume of the gellable organic solvent may be accomplished using a vessel of a suitable shape and size to hold a desired volume of gelled fluid. The vessel may include mixing apparatus for stirring or mixing the pre-solvation mixture formed by combining the gellable organic solvent and the aluminum crosslinking compound. In some embodiments, the first volume of the gellable organic solvent represents an amount of gellable organic solvent that is from 10% to 75% by volume, or from 10% to 60% by volume, or from 10% to 50% by volume, from 10% to 25% by volume, from 25% to 50% by volume, or from 25% to 75% by volume of the total volume of gellable organic solvent intended to be present in the gelled fluid being prepared.

Solvation is the process of attraction and association of molecules of a solvent with molecules or ions of a solute, and is more commonly referred to as dissolving a solute. As ions dissolve in a solvent they spread out and become surrounded by solvent molecules. During preparation of gelled fluids according to embodiments, ingredients such as aluminum alkanoates, phosphate esters, or other additives may be mixed until they completely dissolve.

Combining the aluminum alkanoate with a first volume of the gellable organic solvent before adding the full amount of gellable organic solvent required for the formulation of gellable fluid accomplishes pre-solvation of the aluminum alkanoate before all ingredients of the final gelled fluid formulation are fully combined. When aluminum alkanoates such as Al octoate, for example, are added in a dry powder form to a gellable organic solvent, the resulting mixture may have a low-viscosity such as approximately 1 centipoise (cP) when measured at the shear rate of 100/s at room temperature. Aluminum alkanoates such as Al octoate, for example, in dry-powder form also may exhibit poor solubility in diesel at room temperature if no heating or extended mixing is applied to aid solvation. Furthermore, when added in amounts up from 0.1% to 20% by weight of a gelled fluid aluminum alkanoates such as Al octoate may require up to a full day to completely dissolve in a gellable organic solvent if a significant heating process is not used to aid the solvation.

Particularly when the solvent is an organic solvent such as diesel or crude oil, heating the solvent to dissolve the solute may not be practical as organic solvents may be highly flammable. Thus, to mitigate low viscosity and poor solubility, aluminum alkanoates in powder form, such as Al octoate powder, for example, may be pre-solvated in a gellable organic solvent as previously described. In some embodiments, a solvation process that would require a full day when all ingredients of the full gelled fluid formulation are combined without pre-solvation may require only 3 minutes to 20 minutes for the smaller volume of materials present in the pre-solvation mixture.

The methods for preparing gelled fluids include adding a mutual solvent to the first volume of gellable organic solvent. As previously described, the mutual solvent increases a solvation rate of the aluminum crosslinking compound in the gellable organic solvent. Thus, when a mutual solvent is a component of the first volume of gellable organic solvent, such that the gellable organic solvent, the aluminum alkanoate, and the mutual solvent exist in a single mixture, the solvation rate of the aluminum alkanoate in the gellable organic solvent may be increased. The mutual solvent is chosen from glycols, glycol ethers, or combinations of these. In embodiments, the mutual solvent is chosen from ethylene glycol, propylene glycol, alkyl ethers of ethylene glycol, alkyl ethers of propylene glycol, or combinations of these; or ethylene glycol, propylene glycol, ethylene glycol mono-butyl ether, 2-butoxyethanol, propylene glycol n-butyl ether, diethylene glycol butyl ether, ethylene glycol monoacetate, butyl carbitol, triethylene glycol monoethyl ether, 1,1'-oxybis(2-propanol), triethylene glycol monomethyl ether, or combinations of these. Further embodiments may include adding 2-butoxyethanol to the first volume of gellable organic solvent as the mutual solvent, alone or in combination with one or more additional mutual solvents.

It should be understood that the addition of one or more mutual solvents during the pre-solvation stage results in a gelled fluid containing the mutual solvent. Therefore, the gelled fluids prepared according to the embodiments of the methods for preparing gelled fluids contain from 0.1% to 5% by weight, based on the total weight of the gelled fluid, of the mutual solvent.

The methods for preparing gelled fluids include gelling the pre-solvation mixture to form a pre-solvated gel. Gelling the pre-solvation mixture may include any technique known to be suitable for gelling a mixture of gellable organic solvent and crosslinking compound. For example, the pre-solvation mixture may be gelled by vigorous stirring, vortexing, or heating, for example, to form a pre-solvated gel material. For example, gelling the pre-solvation mixture may include blending or vortexing the pre-solvation mixture at high speeds with the gellable organic solvent for less than a minute at room temperature. For example, the pre-solvation mixture may be stirred at a rate sufficient to produce a vortex and then heated until the vortex disappears, resulting in a gelled fluid consistency. Because only a small portion of the entire amount of the gellable organic solvent intended to be in the final gelled fluid is heated, the gelling of the pre-solvation mixture requires substantially less energy for such blending, vortexing, or heating steps than would be required if the full volume of all ingredients were subjected to the same processes.

The methods for preparing gelled fluids include combining the pre-solvated gel with a formulation fluid to form a gellable mixture. After the pre-solvated gel is formed, the pre-solvated gel may be combined with the remainder of ingredients intended to be part of the full gelled fluid formulation. The remainder of ingredients may be contained in a single formulation fluid, for example, or may be added in any desired sequence. The formulation fluid contains a second volume of the gellable organic solvent. The second volume of gellable organic solvent is the same gellable organic solvent as was present in the first volume of gellable organic solvent. The formulation fluid may contain only the second volume of gellable organic solvent or may contain additional ingredients, intended to be present in the final gelled fluid, that were not added to the first volume of gellable organic solvent when the pre-solvation mixture was prepared. Combining the pre-solvated gel with the formulation fluid may be accomplished by adding the pre-solvated gel to the formulation fluid or by adding the formulation fluid to the pre-solvated gel.

According to some embodiments, the formulation fluid with which the pre-solvated gel is combined may include one or more additional ingredients or gel-forming compounds such as a phosphate ester, an iron (III) crosslinking compound, an additional aluminum crosslinking compound, or a combination of these. Thus, the methods for preparing gelled fluids may further include, before gelling the gellable mixture, adding at least one additional gel-forming compound to the formulation fluid or the gellable mixture. The at least one additional gel-forming compound may be chosen from phosphate esters, iron (III) crosslinking compounds, aluminum crosslinking compounds, or a combinations of these. In some embodiments, the additional aluminum crosslinking compounds may include an unsolvated aluminum crosslinking compound. For example, the methods for preparing gelled fluids may further include, before gelling the gellable mixture, adding unsolvated aluminum alkanoate to the gellable mixture.

In non-limiting, illustrative embodiments, adding of the additional gel-forming compounds to the gellable mixture may include, for example: adding to the gellable mixture from 0.1% to 20% by weight of the phosphate ester, based on the total weight of the gellable mixture; adding to the gellable mixture from 0.1% to 20% by weight of the iron (III) crosslinking compound, based on the total weight of the gellable mixture; adding to the gellable mixture from 0.1% to 20% by weight of the aluminum crosslinking compounds, based on the total weight of the gellable mixture; or adding to the gellable mixture at least two of the additional gel-forming compounds in the amounts stated.

By such additions of the additional gel-forming compounds to the gellable mixture, a final gelled fluid may contain no phosphate ester or, for example, from 0.1 to 20% by weight phosphate ester. Likewise, a final gelled fluid may contain no iron (III) crosslinking compound or, for example, from 0.1 to 20% by weight iron (III) crosslinking compound. Likewise, a final gelled fluid may contain aluminum crosslinking compound in addition to the aluminum crosslinking compound previously included in pre-solvated form or, for example, from 0.1% to 20% by weight aluminum crosslinking compound in addition to the aluminum crosslinking compound previously included in pre-solvated form. As described previously, large amounts of phosphate esters may cause fouling in refiners. Gelled fluids according to embodiments of this disclosure may have 50% to 100% less phosphate esters in the gelled fluid yet may maintain viscosity necessary for oil wellbore treatments at high temperatures. Examples of iron (III) crosslinking compounds that may be combined with the gellable mixture include ferric sulfate or ferric chloride. A commercially available iron (III) crosslinking compound, EA-3 cross linking solution, is sold by Ethox Chemicals, Inc. of Greenville, South Carolina, U.S.A.

The methods for preparing gelled fluids include gelling the gellable mixture to form the gelled fluid. The gellable mixture may represent the mixture of all ingredients intended to be present in the gellable fluid, before the final gelled fluid is made into a gelatinous state. In embodiments, gelling the gellable mixture may include any technique known to be suitable for gelling a mixture of gellable organic solvent and crosslinking compound. For example, gelling the gellable mixture may include heating the gellable mixture until the pre-solvated gel is formed, or mixing the gellable mixture until the pre-solvated gel is formed, or heating and mixing the gellable mixture until the pre-solvated gel is formed.

Gelled fluids prepared according methods of any of the embodiments previously described may be used to treat subterranean formations by introducing the gelled fluid so prepared into the subterranean formation. Additionally, subterranean formations may be treated using the gelled fluids prepared according to methods of any of the embodiments previously described by any suitable fracking technique.

### EXAMPLES

### Comparative Example

As a basis for comparing low-phosphorus and no-phosphorus gelled fluids according to embodiments of this disclosure with gelled fluids having a significantly greater amount of phosphorus, a gelled fluid was prepared to contain 8 mL/L (8 gpt) EG-2 phosphate esters and 8 mL/L (8 gpt) EA-3 (an iron (III) crosslinker compound) in a diesel solvent. Viscosity of the comparative gelled fluid was measured with a Grace M5600 at a shear rate of 100 per second (100 s⁻¹). Viscosity and temperature of the comparative gelled fluid as functions of time are provided in FIG. 1. The maximum viscosity was approximately 250 cP (at 100·s⁻¹ shear rate) at 121 °C (250 degrees Fahrenheit (°F)), and the final viscosity was approximately 200 cP (at 100·s⁻¹ shear rate) at 121 °C (250 °F).

### Example 1 (Comparative)

A gelled fluid with reduced phosphorus was prepared, containing 2 mL/L (2 gpt) EG-2 phosphate ester and 2 mL/L (2 gpt) EA-3 iron (III) crosslinker. The gelled fluid contained only approximately 25% phosphorus compared with the gelled fluid in the Comparative Example. These compounds were added to diesel while blending the diesel sufficiently vigorously to initially form a vortex. The vortex quickly closed within approximately 10 seconds at room temperature. Approximately 2.4% by weight Al octoate powder was then added to the blender while blending the mixture.

The viscosity of the gelled fluid according to this Example 1 was measured with Grace M5600 at a shear rate of 100·s⁻¹. Viscosity and temperature of the gelled fluid according to this Example 1 as functions of time are provided in FIG. 2. The maximum viscosity was approximately 280 cP (at 100·s⁻¹ shear rate) at 121 °C (250 °F), and the final viscosity was approximately 280 cP (at 100·s⁻¹ shear rate) at 121 °C (250 °F). In comparison to the gelled fluid of the Comparative Example, the low-phosphate containing gelled fluid according to this Example 1 had a greater viscosity maximum, while containing 25% of the amount of phosphate ester in the Comparative Example.

### Example 2 (Comparative)

An additional gelled fluid was prepared to further reduce the phosphorus content and to enhance the initial fluid viscosity. The aluminum (Al) octoate powder that is currently used generates low viscosity (approximately 1 cP at 100·s⁻¹ shear rate) in diesel at room temperature without heating up and/or extended mixing. To mitigate the issue, the Al octoate powder was "pre-solvated" in diesel by heating, forming a gel-like material. All measurements were performed before pre-solvating the Al octoate. The gelled fluid of this Example contained about 0.5% by weight pre-solvated Al octoate and was prepared by dissolving 0.5 g pre-dissolved in about 25 g of diesel, then adding an additional 75 g of diesel while blending. An additional 1.2% by weight (1.2 g) Al octoate powder was then added while blending continued for about 10 to 20 minutes. In total, the gelled fluid contained 1.7% by weight A1 octoate, based on the weight of the diesel in the gelled fluid, and 0% by weight phosphate esters.

The viscosity of the fluid according to Example 2 was measured with Grace M5600 at a shear rate of 100·s⁻¹. Viscosity and temperature of the gelled fluid according to this Example 2 as functions of time are provided in FIG. 3. The initial viscosity was approximately 32 cP (at 100·s⁻¹ shear rate) at 121 °C (250 °F), and the final viscosity was approximately 800 cP (at 100·s⁻¹ shear rate) at 121 °C (250 °F).

In summary, the phosphorus-free gelled fluid system of this Example 2 was prepared in two steps. First, part of the gelling agent (Al octoate powder) was pre-solvated. Second, the rest of the gelling agent and the pre-solvated gelling agent were added together and solvated in a hydrocarbon solvent, mainly diesel.

### Example 3 (Comparative)

To further enhance initial viscosity, another gelled fluid was prepared. To prepare the gelled fluid of this Example 3, a gel-like material containing 1.2% by weight "pre-solvated" Al octoate was prepared by pre-solvating 1.2 g Al octoate in about 50 g of diesel, then adding an additional 50 g of diesel to the pre-solvated mixture while blending. An additional 0.5% (0.5 g) Al octoate powder was then added while blending continued. In total, the gelled fluid contained 1.7% Al octoate and 0% phosphate esters. The viscosity of the fluid in Example 3 was measured with Grace M5600 at a shear rate of 100·s⁻¹. Viscosity and temperature of the gelled fluid according to this Example 3 as functions of time are provided in FIG. 4. The initial viscosity was further improved to approximately 109 cP (at 100·s⁻¹ shear rate) at 121 °C (250 °F) and the maximum viscosity was 1300 cP, while the final viscosity was approximately 680 cP (at 100·s⁻¹ shear rate) at 121 °C (250 °F).

Again, this phosphorus-free gelled fluid system was prepared in two steps. First, part of the gelling agent (Al octoate powder) was pre-solvated. Second, the rest of the gelling agent and the pre-solvated gelling agent were added together and solvated in hydrocarbon.

### Example 4

To enhance the initial gelled fluid viscosity and to simplify the mixing procedure in real operations, another new gelled fluid was prepared. To prepare the gelled fluid, 3.6% by weight Al octoate powder was prepared by adding (3.6 g Al octoate to 100 g of diesel, immediately followed by an addition of 2% by weight (2 g) of 2-butoxyethanol as a mutual solvent. The mutual solvent significantly accelerated the solvation of the Al octoate powder. Upon sufficient solvation, same amount of diesel (100 g) was added to the blender and mixed. The final gelled fluid thus contained 1.8% by weight Al octoate and 1% 2-butoxyethanol.

The viscosity of the fluid of Example 4 was measured with Grace M5600 at a shear rate of 100·s⁻¹. Viscosity and temperature of the gelled fluid according to this Example 4 as functions of time are provided in FIG. 5. The initial viscosity (the lowest point) was improved to approximately 57 cP (at 100·s⁻¹ shear rate), the final viscosity was approximately 300 cP (at 100·s⁻¹ shear rate) at 121 °C (250 °F) and a maximum viscosity was approximately 1350 cP (at 100·s⁻¹ shear rate) at 121 °C (250 °F).

The gelled fluid prepared according to Examples 2 and 3 are both two-compound formulations made by a two-step method (pre-solvating and gelling the aluminum crosslinking compound, followed by adding the remaining gellable organic solvent and the crosslinking compound). The gelled fluid according to Example 4 varies slightly from the gelled fluid according to Examples 2 and 3, owing to the addition of the mutual solvent when pre-solvating the aluminum crosslinking compound. To prepare the gelled fluid according to Example 4, the aluminum octoate was dissolved or solvated in a first volume of the gellable organic solvent, and 2-butoxyethanol, a mutual solvent, were added to form a pre-solvation mixture, which was then gelled.

Without intent to be bound by theory, it is believed that greater concentrations of the mutual solvent in the gelled fluid of Example 4 may have further accelerated the solvation of the aluminum octoate gelling agent, but could damage the gelled fluid viscosity at the test temperature. It is believed that there may be a trade-off between the solvation speed (and the related initial fluid viscosity at surface temperature) and the fluid viscosity at the test temperature of 121 °C (250 °F). When organic solvent volume (diesel in this example) is reduced to 50% during a preparation involving pre-solvation, the effective mutual solvent dose was doubled to 2%, resulting in fast solvation. When the full amount of solvent was finally added, the fluid viscosity was not affected at the test temperature, because the mutual solvent concentration was decreased back to the original 1%. Though the final viscosity of the gelled fluid of Example 4 was less than the final viscosities of the gelled fluids of Examples 1-3, the gelled fluid in Example 4 has desirable characteristics.

The gelled fluids of Examples 2 and 3, as reflected in their viscosity data in FIG. 3 and FIG. 4, respectively, have a maximum viscosity at 121 °C (250 °F) comparable to that observed in the gelled fluid of Example 4. Nevertheless, the viscosities of the gelled fluids of Examples 2 and 3 in these examples did not decrease to the extent observed from the gelled fluid of Example 4. Notably, the gelled fluids of Examples 2, 3, and 4 contained no phosphate ester. Compared to the gelled fluid described in the Comparative Example, the viscosity maxima of the gelled fluids of Examples 2, 3, and 4 are nearly 2 to 3 times greater than the maximum viscosity of the gelled fluid of the Comparative Example.

It should be apparent to those skilled in the art that various modifications and variations can be made to the described embodiments without departing from the scope of the claimed subject matter. Thus, it is intended that the specification cover the modifications and variations of the various described embodiments provided such modification and variations come within the scope of the appended claims.

## Claims

1. A gelled fluid comprising:
a gellable organic solvent;
from 0.1% to 20% by weight, based on the total weight of the gelled fluid, of an aluminum alkanoate crosslinking compound; and
from 0.1% to 5% by weight, based on the total weight of the gelled fluid, of a mutual solvent that increases a solvation rate of the aluminum alkanoate crosslinking compound in the gellable organic solvent;
wherein the mutual solvent is chosen from glycols, glycol ethers, or combinations thereof;
wherein the gellable organic solvent is chosen from diesel oil, crude oil, kerosene, paraffinic oil, refined oil, mineral oil, shale oil, tight oil, liquefied natural gas, vegetable oil, animal oil, or combinations thereof.

2. The gelled fluid of claim 1, in which the mutual solvent is chosen from ethylene glycol, propylene glycol, alkyl ethers of ethylene glycol, alkyl ethers of propylene glycol, or combinations thereof, preferably wherein the mutual solvent is chosen from ethylene glycol, propylene glycol, ethylene glycol mono-butyl ether, 2-butoxyethanol, propylene glycol n-butyl ether, diethylene glycol butyl ether, ethylene glycol monoacetate, butyl carbitol, triethylene glycol monoethyl ether, 1,1'-oxybis(2-propanol), triethylene glycol monomethyl ether, or combinations thereof.

3. The gelled fluid of claim 2, wherein the mutual solvent comprises 2-butoxyethanol.

4. The gelled fluid according to any preceding claim, in which the aluminum alkanoate crosslinking compound comprises aluminum octoate.

5. The gelled fluid according to any preceding claim, in which the aluminum alkanoate crosslinking compound is aluminum octoate.

6. The gelled fluid of any preceding claim, comprising from: 0.1% to 10% by weight, or 0.1% to 5% by weight, based on the total weight of the gelled fluid, of the aluminum alkanoate crosslinking compound.

7. The gelled fluid of any of claims 1-5, comprising from 0.1% to 5% by weight, from 0.1% to 4% by weight, from 0.1% to 3% by weight, from 0.1 to 2% by weight, or from 0.1 to 1% by weight, based on the total weight of the gelled fluid, of the mutual solvent.

8. A method of preparing a gelled fluid, the method comprising:
combining an aluminum alkanoate and a first volume of a gellable organic solvent to form a pre-solvation mixture;
gelling the pre-solvation mixture to form a pre-solvated gel;
combining the pre-solvated gel with a formulation fluid to form a gellable mixture, the formulation fluid comprising a second volume of the gellable organic solvent; and
gelling the gellable mixture to form the gelled fluid:
wherein the gellable organic solvent is chosen from diesel oil, crude oil, kerosene, paraffinic oil, refined oil, mineral oil, shale oil, tight oil, liquefied natural gas, vegetable oil, animal oil or a combination thereof;
wherein a mutual solvent is added to the first volume of the gellable organic solvent;
wherein the mutual solvent increases a solvation rate of the aluminum alkanoate in the gellable organic solvent, and wherein the mutual solvent is chosen from glycols, glycol ethers, or combinations thereof.

9. The method of claim 8, in which the aluminum alkanoate comprises aluminum octoate, and preferably wherein the aluminum alkanoate is aluminum octoate.

10. The method of claim 8 or claim 9, wherein the mutual solvent is chosen from ethylene glycol, propylene glycol, alkyl ethers of ethylene glycol, alkyl ethers of propylene glycol, or combinations thereof; or wherein the mutual solvent is chosen from ethylene glycol, propylene glycol, ethylene glycol mono-butyl ether, 2-butoxyethanol, propylene glycol n-butyl ether, diethylene glycol butyl ether, ethylene glycol monoacetate, butyl carbitol, triethylene glycol monoethyl ether, 1,1'-oxybis(2-propanol), triethylene glycol monomethyl ether, or combinations thereof; and preferably wherein the mutual solvent comprises 2-butoxyethanol.

11. The method of any one of claims 8 to 10, in which gelling the pre-solvation mixture comprises solvating the aluminum alkanoate in the pre-solvation mixture.

12. The method of claim 11, in which solvating the aluminum alkanoate in the pre-solvation mixture comprises mixing the pre-solvation mixture until the gelled fluid is formed.

13. The method of any one of claims 8 to 12, wherein the gelled fluid comprises from 0.1% by weight to 5% by weight, based on the total weight of the gelled fluid, aluminum alkanoate.

14. The method of any one of claims 8 to 12, wherein the gelled fluid comprises from 0.1% to 5% by weight, from 0.1% to 4% by weight, from 0.1% to 3% by weight, from 0.1 to 2% by weight, or from 0.1 to 1% by weight, based on the total weight of the gelled fluid, of the mutual solvent.

15. A method of treating a subterranean formation, the method comprising:
introducing a gelled fluid prepared according to any one of claims 8 to 14, or a gelled fluid according to any one of claims 1 to 7, into the subterranean formation.

## Patentansprüche

1. Gelierte Flüssigkeit, die Folgendes umfasst:
ein gelierbares organisches Lösungsmittel;
0,1 Gew.-% bis 20 Gew.-%, bezogen auf das Gesamtgewicht der gelierten Flüssigkeit, einer vernetzenden Aluminiumalkanoatverbindung; und
0,1 Gew.-% bis 5 Gew.-%, bezogen auf das Gesamtgewicht der gelierten Flüssigkeit, eines beidseitigen Lösungsmittels, das die Lösungsgeschwindigkeit der vernetzenden Aluminiumalkanoatverbindung in dem gelierbaren organischen Lösungsmittel erhöht;
wobei das gemeinsame Lösungsmittel aus Glykolen, Glykolethern oder Kombinationen davon ausgewählt ist;
wobei das gelierbare organische Lösungsmittel aus Dieselöl, Rohöl, Kerosin, Paraffinöl, raffiniertem Öl, Mineralöl, Schieferöl, unkonventionellem Öl, verflüssigtem Erdgas, pflanzlichem Öl, tierischem Öl oder Kombinationen davon ausgewählt ist.

2. Gelierte Flüssigkeit nach Anspruch 1, in der das beidseitige Lösungsmittel aus Ethylenglykol, Propylenglykol, Alkylethern von Ethylenglykol, Alkylethern von Propylenglykol oder Kombinationen davon ausgewählt ist, wobei das beidseitige Lösungsmittel vorzugsweise aus Ethylenglykol, Propylenglykol, Ethylenglykolmonobutylether, 2-Butoxyethanol, Propylenglykol-n-butylether, Diethylenglykolbutylether, Ethylenglykolmonoacetat, Butylcarbitol, Triethylenglykolmonoethylether, 1,1'-Oxybis(2-propanol), Triethylenglykolmonomethylether oder Kombinationen davon ausgewählt ist.

3. Gelierte Flüssigkeit nach Anspruch 2, wobei das beidseitige Lösungsmittel 2-Butoxyethanol umfasst.

4. Gelierte Flüssigkeit nach einem der vorhergehenden Ansprüche, in der die vernetzende Aluminiumalkanoatverbindung Aluminiumoctoat umfasst.

5. Gelierte Flüssigkeit nach einem der vorhergehenden Ansprüche, in der die vernetzende Aluminiumalkanoatverbindung Aluminiumoctoat ist.

6. Gelierte Flüssigkeit nach einem der vorhergehenden Ansprüche, umfassend: 0,1 Gew.-% bis 10 Gew.-% oder 0,1 Gew.-% bis 5 Gew.-%, bezogen auf das Gesamtgewicht der gelierten Flüssigkeit, der vernetzenden Aluminiumalkanoatverbindung.

7. Gelierte Flüssigkeit nach einem der Ansprüche 1-5, die 0,1 Gew.-% bis 5 Gew.-%, 0,1 Gew.-% bis 4 Gew.-%, 0,1 Gew.-% bis 3 Gew.-%, 0,1 Gew.-% bis 2 Gew.-% oder 0,1 Gew.-% bis 1 Gew.-%, bezogen auf das Gesamtgewicht der gelierten Flüssigkeit, des beidseitigen Lösungsmittels umfasst.

8. Verfahren zum Herstellen einer gelierten Flüssigkeit, wobei man bei dem Verfahren:
ein Aluminiumalkanoat und ein erstes Volumen eines gelierbaren organischen Lösungsmittels zur Bildung einer Vorlösemischung kombiniert;
die Vorlösemischung zur Bildung eines vorgelösten Gels geliert;
das vorgelöste Gel mit einer Formulierungsflüssigkeit zur Bildung einer gelierbaren Mischung kombiniert, wobei die Formulierungsflüssigkeit ein zweites Volumen des gelierbaren organischen Lösungsmittels umfasst; und
die gelierbare Mischung zur Bildung der gelierten Flüssigkeit geliert:
wobei das gelierbare organische Lösungsmittel aus Dieselöl, Rohöl, Kerosin, Paraffinöl, raffiniertem Öl, Mineralöl, Schieferöl, unkonventionellem Öl, verflüssigtem Erdgas, pflanzlichem Öl, tierischem Öl oder einer Kombination davon ausgewählt ist;
wobei dem ersten Volumen des gelierbaren organischen Lösungsmittels ein beidseitiges Lösungsmittel zugegeben wird;
wobei das beidseitige Lösungsmittel eine Lösungsgeschwindigkeit des Aluminiumalkanoats in dem gelierbaren organischen Lösungsmittel erhöht und wobei das beidseitige Lösungsmittel aus Glykolen, Glykolethern oder Kombinationen davon ausgewählt ist.

9. Verfahren nach Anspruch 8, bei dem das Aluminiumalkanoat Aluminiumoctoat umfasst und wobei das Aluminiumalkanoat vorzugsweise Aluminiumoctoat ist.

10. Verfahren nach Anspruch 8 oder Anspruch 9, wobei das beidseitige Lösungsmittel aus Ethylenglykol, Propylenglykol, Alkylethern von Ethylenglykol, Alkylethern von Propylenglykol oder Kombinationen davon ausgewählt ist; oder wobei das beidseitige Lösungsmittel aus Ethylenglykol, Propylenglykol, Ethylenglykolmonobutylether, 2-Butoxyethanol, Propylenglykol-n-butylether, Diethylenglykolbutylether, Ethylenglykolmonoacetat, Butylcarbitol, Triethylenglykolmonoethylether, 1,1'-Oxybis(2-propanol), Triethylenglykolmonomethylether oder Kombinationen davon ausgewählt ist; und wobei das beidseitige Lösungsmittel vorzugsweise 2-Butoxyethanol umfasst.

11. Verfahren nach einem der Ansprüche 8 bis 10, bei dem man beim Gelieren der Vorlösemischung das Aluminiumalkanoat in der Vorlösemischung löst.

12. Verfahren nach Anspruch 11, bei dem man beim Lösen des Aluminiumalkanoats in der Vorlösemischung die Vorlösemischung solange mischt, bis die gelierte Flüssigkeit gebildet wird.

13. Verfahren nach einem der Ansprüche 8 bis 12, wobei die gelierte Flüssigkeit 0,1 Gew.-% bis 5 Gew.-%, bezogen auf das Gesamtgewicht der gelierten Flüssigkeit, Aluminiumalkanoat umfasst.

14. Verfahren nach einem der Ansprüche 8 bis 12, wobei die gelierte Flüssigkeit 0,1 Gew.-% bis 5 Gew.-%, 0,1 Gew.-% bis 4 Gew.-%, 0,1 Gew.-% bis 3 Gew.-%, 0,1 Gew.-% bis 2 Gew.-% oder 0,1 Gew.-% bis 1 Gew.-%, bezogen auf das Gesamtgewicht der gelierten Flüssigkeit, des beidseitigen Lösungsmittels umfasst.

15. Verfahren zum Behandeln einer unterirdischen Formation, wobei man bei dem Verfahren:
eine nach einem der Ansprüche 8 bis 14 hergestellte gelierte Flüssigkeit oder eine gelierte Flüssigkeit nach einem der Ansprüche 1 bis 7 in die unterirdische Formation einpresst.

## Revendications

1. Fluide gélifié comprenant :
un solvant organique gélifiable ;
de 0,1 % à 20 % en poids, sur la base du poids total du fluide gélifié, d'un composé de réticulation d'alcanoate d'aluminium ; et
de 0,1 % à 5 % en poids, sur la base du poids total du fluide gélifié, d'un solvant mutuel qui augmente un taux de solvatation du composé de réticulation d'alcanoate d'aluminium dans le solvant organique gélifiable ;
dans lequel le solvant mutuel est choisi parmi des glycols, des éthers de glycol, ou des combinaisons de ceux-ci ;
dans lequel le solvant organique gélifiable est choisi parmi du gazole, du pétrole brut, du kérosène, une huile paraffinique, un pétrole raffiné, une huile minérale, un pétrole de schiste, un pétrole de réservoir étanche, du gaz naturel liquéfié, une huile végétale, une huile animale ou une combinaison de ceux-ci.

2. Fluide gélifié selon la revendication 1, dans lequel le solvant mutuel est choisi parmi l'éthylène glycol, le propylène glycol, des éthers d'alkyle d'éthylène glycol, des éthers d'alkyle de propylène glycol, ou des combinaisons de ceux-ci, de préférence dans lequel le solvant mutuel est choisi parmi l'éthylène glycol, le propylène glycol, l'éther monobutylique d'éthylène glycol, le 2-butoxyéthanol, l'éther n-butylique de propylène glycol, l'éther butylique de diéthylène glycol, le monoacétate d'éthylène glycol, le butylcarbitol, l'éther monoéthylique de triéthylène glycol, le 1,1'-oxybis(2-propanol), l'éther monométhylique de triéthylène glycol, ou des combinaisons de ceux-ci.

3. Fluide gélifié selon la revendication 2, dans lequel le solvant mutuel comprend le 2-butoxyéthanol.

4. Fluide gélifié selon l'une quelconque des revendications précédentes, dans lequel le composé de réticulation d'alcanoate d'aluminium comprend l'octoate d'aluminium.

5. Fluide gélifié selon l'une quelconque des revendications précédentes, dans lequel le composé de réticulation d'alcanoate d'aluminium est l'octoate d'aluminium.

6. Fluide gélifié selon l'une quelconque des revendications précédentes, comprenant de : 0,1 % à 10 % en poids, ou 0,1 % à 5 % en poids, sur la base du poids total du fluide gélifié, du composé de réticulation d'alcanoate d'aluminium.

7. Fluide gélifié selon l'une quelconque des revendications 1 à 5, comprenant de 0,1 % à 5 % en poids, de 0,1 % à 4 % en poids, de 0,1 % à 3 % en poids, de 0,1 à 2 % en poids, ou de 0,1 à 1 % en poids, sur la base du poids total du fluide gélifié, du solvant mutuel.

8. Procédé de préparation d'un fluide gélifié, le procédé comprenant :
la combinaison d'un alcanoate d'aluminium et d'un premier volume d'un solvant organique gélifiable pour former un mélange de présolvatation ;
la gélification du mélange de présolvatation pour former un gel présolvaté ;
la combinaison du gel présolvaté avec un fluide de formulation pour former un mélange gélifiable, le fluide de formulation comprenant un deuxième volume du solvant organique gélifiable ; et
la gélification du mélange gélifiable pour former le fluide gélifié :
dans lequel le solvant organique gélifiable est choisi parmi du gazole, du pétrole brut, du kérosène, une huile paraffinique, un pétrole raffiné, une huile minérale, un pétrole de schiste, un pétrole de réservoir étanche, du gaz naturel liquéfié, une huile végétale, une huile animale ou une combinaison de ceux-ci
dans lequel le solvant mutuel augmente un taux de solvatation de l'alcanoate d'aluminium dans le solvant organique gélifiable, et dans lequel le solvant mutuel est choisi parmi des glycols, des éthers de glycol, ou des combinaisons de ceux-ci.

9. Procédé selon la revendication 8, dans lequel l'alcanoate d'aluminium comprend l'octoate d'aluminium, et de préférence dans lequel l'alcanoate d'aluminium est l'octoate d'aluminium.

10. Procédé selon la revendication 8 ou la revendication 9, dans lequel le solvant mutuel est choisi parmi l'éthylène glycol, le propylène glycol, des éthers d'alkyle d'éthylène glycol, des éthers d'alkyle de propylène glycol, ou des combinaisons de ceux-ci ; ou dans lequel le solvant mutuel est choisi parmi l'éthylène glycol, le propylène glycol, l'éther monobutylique d'éthylène glycol, le 2-butoxyéthanol, l'éther n-butylique de propylène glycol, l'éther butylique de diéthylène glycol, le monoacétate d'éthylène glycol, le butylcarbitol, l'éther monoéthylique de triéthylène glycol, le 1,1'-oxybis(2-propanol), l'éther monométhylique de triéthylène glycol, ou des combinaisons de ceux-ci ; et, de préférence, dans lequel le solvant mutuel comprend le 2-butoxyéthanol.

11. Procédé selon l'une quelconque des revendications 8 à 10, dans lequel la gélification du mélange de présolvatation comprend la solvatation de l'alcanoate d'aluminium dans le mélange de présolvatation.

12. Procédé selon la revendication 11, dans lequel la solvatation de l'alcanoate d'aluminium dans le mélange de présolvatation comprend le mélange du mélange de présolvatation jusqu'à ce que le fluide gélifié soit formé.

13. Procédé selon l'une quelconque des revendications 8 à 12, dans lequel le fluide gélifié comprend de 0,1 % en poids à 5 % en poids, sur la base du poids total du fluide gélifié, d'alcanoate d'aluminium.

14. Procédé selon l'une quelconque des revendications 8 à 12, dans lequel le fluide gélifié comprend de 0,1 % à 5 % en poids, de 0,1 % à 4 % en poids, de 0,1 % à 3 % en poids, de 0,1 à 2 % en poids, ou de 0,1 à 1 % en poids, sur la base du poids total du fluide gélifié, du solvant mutuel.

15. Procédé de traitement d'une formation souterraine, le procédé comprenant :
l'introduction d'un fluide gélifié préparé selon l'une quelconque des revendications 8 à 14, ou d'un fluide gélifié selon l'une quelconque des revendications 1 à 7, dans la formation souterraine.
